Europäisches Patentamt

(19) European Patent Office

Office européen des brevets

(11) Publication number: **0 120 846**

**B1**

(12) # EUROPEAN PATENT SPECIFICATION

(45) Date of publication of patent specification: **20.05.87**

(51) Int. Cl.⁴: **C 04 B 35/58, C 04 B 35/64**

(21) Application number: **82903507.0**

(22) Date of filing: **30.09.82**

(86) International application number:
**PCT/US82/01369**

(87) International publication number:
**WO 84/01370 12.04.84 Gazette 84/10**

(54) **METHOD OF FABRICATING HOT PRESSED CERAMIC BODIES.**

| | |
|---|---|
| (43) Date of publication of application:<br>**10.10.84 Bulletin 84/41** | (73) Proprietor: **Ford Motor Company**<br>**The American Road**<br>**Dearborn, MI 48121 (US)**<br>(84) **SE** |
| (45) Publication of the grant of the patent:<br>**20.05.87 Bulletin 87/21** | (73) Proprietor: **FORD MOTOR COMPANY LIMITED**<br>**Eagle Way**<br>**Brentwood Essex CM13 3BW (GB)**<br>(84) **GB** |
| (84) Designated Contracting States:<br>**DE FR GB SE** | (73) Proprietor: **FORD-WERKE**<br>**AKTIENGESELLSCHAFT**<br>**Ottoplatz 2 Postfach 21 03 69**<br>**D-5000 Köln 21 (DE)**<br>(84) **DE** |
| (56) References cited:<br>**DE-C- 260 956**<br>**GB-A-1 340 696**<br>**GB-A-1 364 451**<br>**GB-A-1 367 462**<br>**GB-A-1 405 171**<br>**GB-A-1 454 929**<br>**US-A-3 413 392**<br>**US-A-3 467 745**<br>**US-A-3 535 132**<br>**US-A-4 087 500**<br>**US-A-4 324 356** | (73) Proprietor: **FORD FRANCE SOCIETE ANONYME**<br>**344 Avenue Napoléon Bonaparte B.P. 307**<br>**F-92506 Rueil Malmaison Cedex (FR)**<br>(84) **FR**<br><br>(72) Inventor: **EZIS, Andre**<br>**23235 West River Road**<br>**Grosse Ile, MI 48138 (US)**<br>Inventor: **BECKWITH, Elaine, C.**<br>**13716 Hamilton**<br>**Riverview, MI 48192 (US)**<br>Inventor: **COPPLE, Warren, B.**<br>**5742 Whitefield**<br>**Dearborn Heights, MI 48127 (US)** |

**0 120 846**

(74) Representative: **Messulam, Alec Moses et al**
**A. Messulam & Co. 24 Broadway**
**Leigh on Sea Essex SS9 1BN (GB)**

## Description

The present invention is directed to a method of making a more economical and distortion free ceramic product, in particular a silicon nitride product suitable for use as a cutting tool by hot pressing with significantly reduced need for subsequent shaping.

Hot pressing of ceramic starting materials has been known for some time (see Refractory-Materials, by Allen M. Alper, Vol. 5, III, "High Temperature Oxides", 1970, pages 184—189, for an explanation of the typical hot pressing process and equipment). The hot pressing sequence usually involves placing a loose particulate powder mixture or semidense pressed block of the powder mixture into a pressing assembly and heating the assembly while applying pressure to the mass sufficient to densify and fuse the particles to a desired degree. Typically, the pressing assembly is a cylinder die closed by end plungers or pistons, one or both of such end plungers or pistons being forceably moved by platens of a press to apply pressure to the mass within the assembly. The cylinder and end plungers are close fitting and are typically constructed of graphite. A refractory insulation shell is wrapped about the cylindrical die assembly and heat is applied thereto by induction coils or by resistance heating. Hot pressing is typically carried out in the temperature range of 1500—1800°C, the pressures employed usually are in the range of $1.38 \times 10^4$—$4.82 \times 10^4$ kPa (2000—7000 psi), and the time period usually comprises 5—180 minutes. The resulting density for silicon nitride so hot pressed is usually in the range of 3.0—3.35 g/cm³.

If the above conventional hot pressing sequence were to be employed for the simultaneous pressing of a plurality of stacked, cold compacted, flat plates (particularly large diameter plates on the order of a 152.4 cm (6 inch) diameter), several problems would be encountered. First, a temperature gradient is created across the lateral width of the plates which results in a corresponding viscosity gradient. Such viscosity gradient causes the pressing assembly to apply a nonuniform pressure distribution across and through the mass of the plates. Secondly, there exists a drag force (a friction force between the pressing assembly walls and the plate sides) which also contributes to a nonuniform pressure distribution across the lateral width of the plates. These two factors together cause materials transport under the hot pressing conditions which in turn results in "dishing" or severe distortion of the flat plates in their fully densified condition.

Such problems as above indicated are amplified when economy is sought by the simultaneous production of a greater number of products, such as four or more plates (hereafter called billets) not separated by rigid spacers. A billet is defined herein to mean a mass of material of suitable thickness from which several useful cutting tools can be directly shaped by merely subdividing the billet by cutting through the thickness thereof. Such billets are either formed in a solid, single layer with a thickness to width ratio of 1:3 to 1:40, or they may be formed in a slab which is segregated by scoring to define a multiple number of cutting tools within a single slab, the segregated pieces being hinged together by the unscored membrane.

In only one instance has the prior art attempted to simultaneously hot press a plurality of silicon nitride components. In British patent 1,405,171, a number of cold compacted preforms are placed in a single layer within a pressing assembly, each preform having a thickness generally equal to its width. Each preform is separated from all others by a release agent. No greater than two layers are used. The problems overcome by this invention would not be experienced in the application of this British patent. Side wall drag would be insufficient to promote distortion since there is little difference in movement between layers; the preforms do not contact the die wall and the thickness to width ratio is only 1:1. Material transport cannot take place as a result of pressure and thermal gradients because there is little relative movement between layers, little or no side wall drag, and the thickness to width ratio is only 1:1. The disclosure thus fails to appreciate the need for a unique stacking sequence that would eliminate dishing in the hot pressing of multiples of billets having a thickness to width ratio of 1:3—1:40.

According to the invention there is provided a method of making hot pressed ceramic bodies, comprising preparing a plurality of ceramic billets, stacking said billets into a pressure assembly having walls to support said billets normal to the direction of pressure and hot pressing groups of said stacked billets under pressure and temperature to densify each of said billets, characterised in that said ceramic billets have a thickness to width ratio in the range of 1:3 to 1:40 and a density of 1.7—2.7 g/cm³, said stacking being in groups of progressively decreasing number so that for a billet group residing in a zone of said compression that will experience the least movement along said pressure direction, the stacked number of the billet is greatest within said group, and for a billet group residing in a zone of compression that will experience the most movement along said pressure direction, the stacked number of billets within said group is the lowest, each group being separated from adjacent groups by an inert rigid spacer; and said hot pressing being carried out to densify each of said billets to at least 95% of theoretical density with a compression ratio of 1.2:1 to 2:1.

It is preferable if (a) the hot pressing is carried out with uniaxial pressure and the number of billets in each of said groups proceeds from a maximum number of 5 to 3 to 2 to 1, the latter group has the lowest number and experiences the most relative movement; or (b) the hot pressing is applied biaxially and the sequence of groups contains the following numbers in order: 1, 2, 3,

10, 3, 2, 1, with the group having the single number experiencing the highest movement during compression and the group with the number 10 experiencing the lowest relative movement during compression.

Advantageously, the billets are prepared by cold compacting a dry milled mixture of silicon powder, $Y_2O_3$, and $Al_2O_3$, and then heating the mixture in a nitrogen atmosphere for a period of time and at a temperature to agglomerate the mass to a density of about 2.3 g/cm³ and a chemical content of α and β phase $Si_3N_4$, silicon yttrium oxynitrides, and some amorphous silicate. The cold compaction is carried out with a pressure of $10.34 \times 10^3$—$13.79 \times 10^3$ kPa (1500—2000 psi).

The spacers are preferably fine grained, high strength graphite with a thickness (0.64 to 2.54 cm) appropriate for withstanding the hot pressing forces and fully transmitting such forces comparable to a die wall. The thickness of the spacers is determined by the rule that in the zone of greatest axial movement for the body, the spacer associated therewith is the thickest because the forces encountered will be the greatest.

The invention will now be described further by way of example, with reference to the accompanying drawings, in which:

Figure 1 is a schematic illustration in central sectional view of a pressing assembly showing the unique sequence of stacking in conformity with this invention for uniaxial pressure;

Figure 2 is a view similar to that of Figure 1 used in the environment of biaxial pressing; and

Figure 3 is a schematic illustration of a pressing assembly after densification using a stacking sequence which shows the disadvantages of using a stacking sequence not in conformity with this invention.

## Detailed description

A preferred method for making silicon nitride comprising objects according to this invention is as follows:

### 1. Compacting

A compact is formed from a mixture of powdered silicon and reactive oxygen carrying powder agents. Reactive powder oxygen carrying agents are defined herein to mean powder ingredients that are effective to form oxynitrides and appropriate silicates when reacted with the silicon under a heated nitrogen atmosphere. The powder agents can be advantageously selected from the group consisting of $Y_2O_3$, $Al_2O_3$, $SiO_2$, $MgO$, $CeO_2$, $ZrO_2$, $HfO_2$, and rare earths. Use of selected quantities of $Y_2O_3$ and $Al_2O_3$ will result in the formation of a silicon yttrium oxynitride phase which (a) will uniformly be disbursed, and (b) displace the detrimental glassy silicate phase normally formed except for a controlled and limited amount of the latter. For purposes of the preferred method, a uniform powder mixture is prepared with 2000 grams of silicon powder (86.6 weight percent of the mixture), 278 grams of $Y_2O_3$ (12 weight percent of the mixture and 13.9 weight percent of silicon powder), and 32 grams of $Al_2O_3$ (1.4 weight percent of the mixture and 1.6 weight percent of the silicon).

Silicon is selected to have 98% or greater purity and a starting average particle size of 8—9.2 microns (μm). The major trace metal contaminants experienced with such impurity include iron, aluminum, Ca and Mn. Nonmetallic contaminants include carbon and $O_2$. The mixture is comminuted and blended by being charged into an inert milling jar along with grinding media in the form of cylinders, milled for 48 hours, at 64 rpm, then the mixture is separated for 48 hours, at 64 rpm, the mixture is separated from the media. The resulting milled mixture will have at least 90% size to an average particle size of less than 23 microns (μm), the oxygen level after milling in air will be increased to 1.6 weight percent of the silicon, and an oxide coating will be present on the silicon in an amount of 3.0 weight percent. The ratio of the $Y_2O_3/SiO_2$ is controlled to be in the range of 1—7 and preferably about 4.

A measured quantity of the milled mixture is loaded into a cold pressed die arrangement and pressed at ambient conditions by use of $9.65 \times 10^3$—$10.34 \times 10^3$ kPa (1400—1500 psi) to form a compact of a size about 15.24 cm (6 inches) in diameter and 1.27 cm (1/2 inch) in thickness, having a green density of 1.4 g/cm³.

### 2. Heating to nitride

The compact is heated in a nitriding atmosphere to produce a silicon nitride comprising body (billet) having at least one dispersed silicon yttrium oxynitride phase, and up to .5% by weight free silicon and unreacted oxygen carrying agents. The body will have a size greater than the object to be subsequently formed and a density less than such object.

To carry out the heating the compact is placed in an enclosed furnace, preferably evacuated to a pressure of less than 1,333 mbar (1 micron), and heated at a fast rate to 1200°F (649°C). The furnace is then filled with a gaseous mixture consisting of 72% by weight nitrogen, 3% hydrogen, and 25% helium, at a pressure of about 18.6 kPa (2.7 psi). The total $O_2$ and $H_2O$ content in such gaseous mixture is less than 4 ppm (parts per million). The temperature of the furnace is then increased to a nitriding temperature of 2000—2500°F (1093—1427°C) at a slower rate. Fresh nitrogen is continuously supplied to the furnace to replace the nitrogen consumed in forming $Si_3N_4$ and silicon yttrium oxynitrides.

The nitrided body (billet) will preferably consist of silicon nitride (at least 60% of which is in the alpha form), silicon yttrium oxynitride in the $Y_1SiO_2N$ phase, and up to 0.5% of either unreacted silicon or yttria. This body is an intermediate product or commodity that has particular utility as a starting material for the hot pressing technique to follow. The billet has a thickness in the range of 0.76—2.54 cm (0.3—1.0 inches) and a width or diameter of 7.62—30.48 cm (3—12 inches); the thickness/width ratio of 1:3 to 1:40.

## 3. Hot pressing

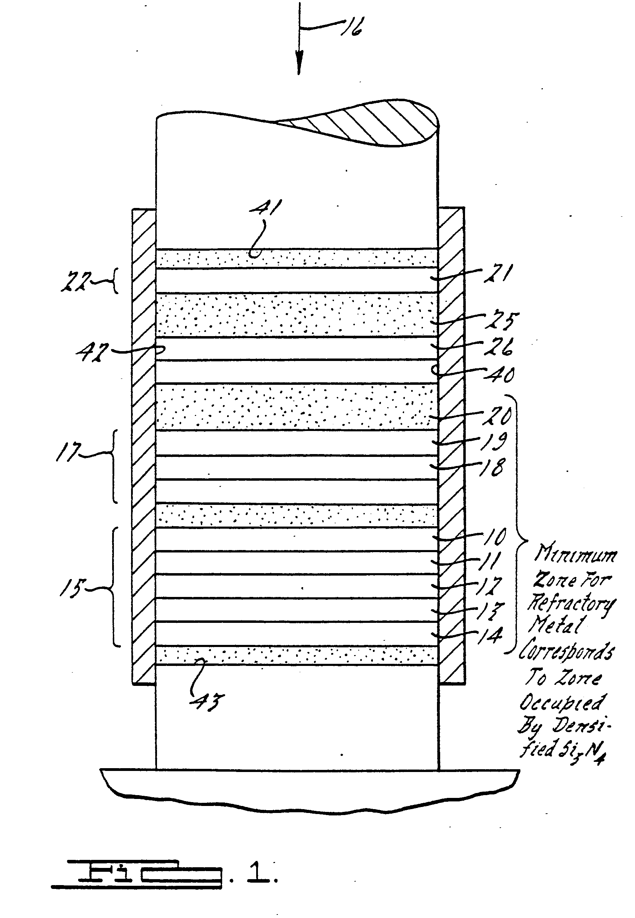

The billets are stacked within a pressing assembly, the assembly having walls to support the series of aligned billets normal to the direction of pressure. As shown in Figure 1, the upper piston is used to apply uniaxial pressure to the stacked series of billets.

The pressing assembly has graphite walls 40—41—42—43. The walls and nitride body are both coated with a slurry of boron nitride and dried. The graphite walls are additionally covered by graphite foil and/or molybdenum foil.

The sequence of stacking of the billets is critical to this invention. The billets are stacked in groups in progressively decreasing numbers so that for a billet group residing in a zone of compression that will experience the least movement along the pressure direction, the stacked number of billets is highest. For the billet group residing in a zone of compression that will experience the move movement along said pressure direction, the stacked number of billets is lowest. Each billet group is separated from adjacent billet groups by an inert rigid spacer comprised of either graphite, substantially full density boron nitride, or other pressure transferring material. Preferably the graphite spacers are covered with boron nitride which in turn is coated with graphite foil. The spacers maintain geometry, undergo no material transport, and are not affected by thermal pressure gradients. The thickness of the spacers is determined by the rule that in the zone of greatest axial movement for the body, the spacer associated therewith is the thickest because of the greater forces encountered.

In particular, the stacking sequence for Figure 1 shows that there are five billets, 10—11—12—13—14, placed in contiguous relationship with one another in the zone of movement 15 which is at the lowest portion of the stack, the latter experiencing the least amount of relative axial movement in the direction of compression 16.

The next billet group comprises three billets, 18—19—20, and will reside in an intermediate zone of movement 17 and therefore has a reduced number. The billet group containing the least number has billet 21 and is in the zone of highest movement 22.

Other combinations of billet grouping can be envisioned as long as the basic criteria of using decreasing numbers of billets in the billet groupings when progressing in a direction from the smallest amount of billet movement (billet 14) to the largest zone of billet movement (billet 21) is utilized.

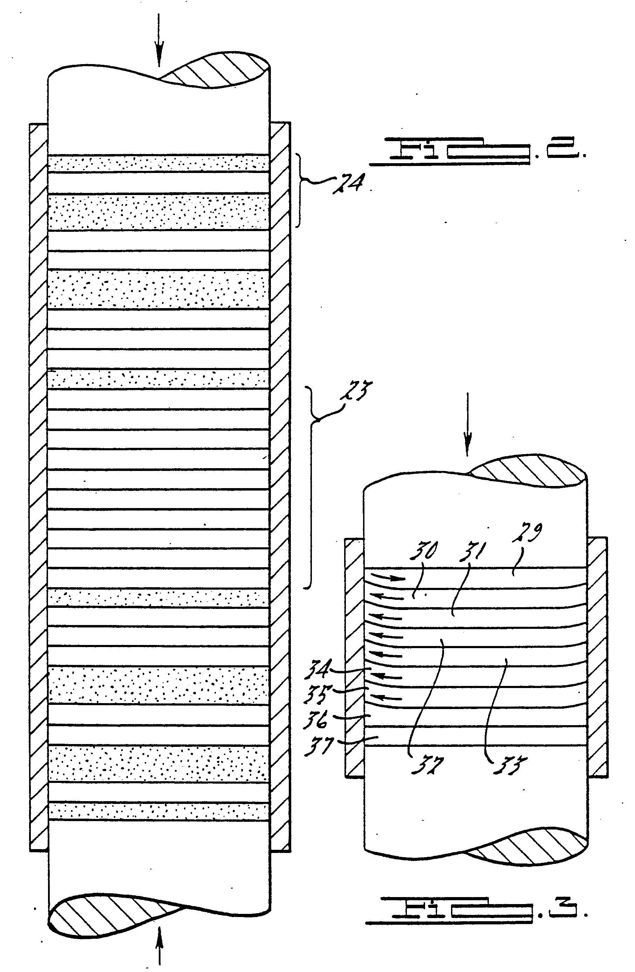

In the environment of biaxial pressure, as shown in Figure 2, the stacking sequence is as indicated. In the zone of least movement 23, there are 10 billets (2×5); in the zone of most movement 24 there is one billet. The stacking sequence is 1—2—3—10—3—2—1.

If the stacking sequence of this invention was not employed, the following phenomena would have resulted. As shown in Figure 3, a pressure distribution is present which is brought about in part from side wall drag; that is, the edges of the billets 29—34 will contact the graphite side walls and impart a resistance to compression and promote a drag. The pressure gradient facilitates material transport from the outside diameter to the center of billets 30—31—32—33 and from the center to the outside diameter on billets 34, 35 and 36. These effects, upon cooling, yield "dished" hot pressed $Si_3N_4$ billets that require substantial amounts of material to be removed (diamond grinding) to produce a flat product.

It is important that the compression ratio for hot pressing be in the range of 1.2:1 to 2:1. The pressure is preferably applied in steps, about 1034 kPa (150 psi) at room temperature before heat-up. Pressure is then increased to $3.44 \times 10^3$ kPa (500 psi) at 1800°F (982°C), pressure is next increased to $1.72 \times 10^4$ kPa (2500 psi) as the temperature is increased to 2500°F (1371°C), finally the temperature is increased to 3000°F (1649°C) and pressure to $2.55 \times 10^4$ kPa (3700 psi). The latter conditions are maintained until full density is achieved. This usually requires 2.0 hours at the ultimate pressing temperature. The object is then cooled at any rate to room temperature.

The resulting object will consist essentially of beta phase silicon nitride, silicon yttrium oxynitrides (predominantly $Y_1SiO_2N$) enveloped by amorphous silicate phase having a thickness of 4—10 angstroms and having no microporosity. The object preferably possesses a hardness HR of 89.0—91.0 on the 45-N scale, a density of 3.30—3.33 g/cm³, a fracture strength of greater than $5.86 \times 10^5$ kPa (85,000 psi) at 1200°C in a four-point bend test, and an oxidation resistance that prevents weight pickup by the object after 450 hours in air at 1000°C.

## Claims

1. A method of making hot pressed ceramic bodies, comprising preparing a plurality of ceramic billets, stacking said billets into a pressure assembly having walls to support said billets normal to the direction of pressure and hot pressing groups of said stacked billets under pressure and temperature to densify each of said billets, characterised in that said ceramic billets have a thickness to width ratio in the range of 1:3 to 1:40 and a density of 1.7—2.7 g/cm³, said stacking being in groups of progressively decreasing number so that for a billet group residing in a zone of said compression that will experience the least movement along said pressure direction, the stacked number of the billet is greatest within said group, and for a billet group residing in a zone of compression that will experience the most movement along said pressure direction, the stacked number of billets within said group is the lowest, each group being separated from adjacent groups by an inert rigid spacer; and said hot pressing being carried out to densify each of said billets to at least 95% of theoretical density with a compression ratio of 1.2:1 to 2:1.

2. A method as claimed in Claim 1, in which said hot pressing is carried out with uniaxial pressure and the number of billets in each of said groups proceeds from a maximum number of 5 to 3 to 2 to 1, the latter being for the group experiencing the most relative movement.

3. A method as claimed in Claim 1, in which said pressure is applied biaxially and the sequence of groups contains the following numbers in order: 1, 2, 3, 10, 3, 2, 1, with the group having the single number experiencing the highest movement during compression and the group with the number 10 experiencing the lowest movement during compression.

4. A method as claimed in Claim 1, in which said ceramic billets are silicon nitride billets and are prepared by heating a mixture of silicon powder, $Y_2O_3$, and $Al_2O_3$ in a nitrogen atmosphere for a period of time and at a temperature to agglomerate said mass to a density of about 2.3 g/cm³ and a chemical content comprised substantially of alpha phase silicon nitride and silicon yttrium oxynitrides.

5. A method as claimed in Claim 1, in which said hot pressing is carried out in increments by applying about 1034 kPa (150 psi) at room temperature, heating to 982°C (1800°F) accompanied by $3.44 \times 10^3$ kPa (500 psi) pressure, then heating further to 1316°C (2400°F) with $1.72 \times 10^4$ kPa (2500 psi) pressure, and finally to 1649°C (3000°F) with $2.55 \times 10^4$ kPa (3700 psi) pressure.

6. A method as claimed in Claim 1, in which said ceramic billets are silicon nitride billets and are prepared by cold compacting a dry ball milled mixture of silicon, $Y_2O_3$, and $Al_2O_3$ powder and then heating in a nitrogen atmosphere to convert said mixture to substantially silicon nitride and silicon yttrium oxynitrides, and cold compaction being carried out with a pressure of about $9.53 \times 10^3$—$10.34 \times 10^3$ kPa (1400—1500 psi).

7. A method as claimed in Claim 1, in which each spacer has a thickness of 0.65—2.54 cm (.25—1.0 inch).

8. A method as claimed in Claim 7, in which the thickness of said spacer varies with the total overall thickness of the billet group immediately adjacent the spacer, said thickness being determined by the rule that in the zone of greatest axial movement for the body, the spacer associated therewith is the thickest.

## Patentansprüche

1. Verfahren zur Herstellung heissgepresster Keramikkörper, bei dem man eine Mehrzahl Keramikbarren herstellt, diese Barren in einer Druckeinrichtung mit Wänden zur Abstützung dieser Barren normal zur Druckrichtung stapelt und Gruppen dieser gestapelten Barren zu deren Verdichtung unter Druck bei erhöhter Temperatur jeweils heisspresst, dadurch gekennzeichnet, dass diese Keramikbarren ein Dicken/Breitenverhältnis im Bereich 1:3 bis 1:40 und eine Dichte von 1,7—2,7 g/cm³ aufweisen, wobei die Stapelung in Gruppen fortschreitend abnehmender Anzahl so erfolgt, dass für eine in einer die kleinste Bewegung entlang jener Druckrichtung erfahrenden Kompressionszone liegende Barrengruppe die gestapelte Anzahl Barren innerhalb dieser Gruppe am grössten und für eine in einer die grösste Bewegung entlang jeder Druckrichtung erfahrenden Kompressionszone liegende Barrengruppe die gestapelte Anzahl Barren innerhalb dieser Gruppe am kleinsten ist, wobei jede Gruppe von danebenliegenden Gruppen durch einen inerten starren Abstandshalter getrennt ist, und wobei diese Heisspressung so weit durchgeführt wird, dass alle diese Barren bei einem Kompressionsverhältnis von 1,2:1 bis 2:1 auf mindestens 95% der theoretischen Dichte verdichtet werden.

2. Verfahren nach Anspruch 1, worin dieses Heisspressen mit einachsigem Druck erfolgt und die Anzahl Barren in diesen Gruppen jeweils von einer Höchstzahl 5 über 3 und 2 auf 1 abnimmt, wobei letztere für die Gruppe gilt welche die grösste Relativbewegung erfährt.

3. Verfahren nach Anspruch 1, worin dieser Druck zweiachsig angelegt wird und die Gruppen in der folgenden Reihenfolge der Zahlen angeordnet sind: 1, 2, 3, 10, 3, 2, 1, wobei die Gruppe mit der Zahl 1 bei der Kompression die grösste Bewegung sowie die Gruppe mit der Zahl 10 bei der Kompression die geringste Bewegung erfährt.

4. Verfahren nach Anspruch 1, worin diese Keramikbarren aus Siliciumnitridbarren bestehen und durch Erhitzen eines Gemischs aus Siliciumpulver, $Y_2O_3$ und $Al_2O_3$ in einer Stickstoffatmosphäre für einen solchen Zeitraum und bei einer solchen Temperatur hergestellt werden, dass diese Masse sich auf eine Dichte von etwa 2,3 g/cm³ agglomeriert und chemisch im wesentlichen Siliciumnitrid der α-Phase und Silicium-Yttriumoxynitride enthält.

5. Verfahren nach Anspruch 1, worin diese Heisspressung stufenweise erfolgt, indem man etwa 1034 kPa (150 psi) bei Raumtemperatur anlegt, auf 982°C (1800°F) erhitzt und gleichzeitig $3,44 \cdot 10^3$ kPa (500 psi) Druck anlegt, dann weiter auf 1316°C (2400°F) bei $1,72 \cdot 10^4$ kPa (2500 psi) Druck und schliesslich auf 1649°C (3000°F) bei $2,55 \cdot 10^4$ kPa (3700 psi) Druck erhitzt.

6. Verfahren nach Anspruch 1, worin diese Keramikbarren aus Siliciumnitridbarren bestehen und durch Kaltverdichtung eines trocken in einer Kugelmühle gemahlenen Gemisches aus Silicium-, $Y_2O_3$- und $Al_2O_3$-Pulver hergestellt und dann in einer Stickstoffatmosphäre zur Umwandlung diese Gemischs in im wesentlichen Siliciumnitrid und Silicium-Yttriumoxynitride erhitzt werden, wobei die Kaltverdichtung bei einem Druck von etwa $9,53 \cdot 10^3$—$10,34 \cdot 10^3$ kPa (1400—1500 psi) erfolgt.

7. Verfahren nach Anspruch 1, worin die Abstandshalter je eine Dicke von 0,65—2,54 cm (0,25—1,0 Zoll) aufweisen.

8. Verfahren nach Anspruch 7, worin die Dicke dieser Abstandshalter mit der Gesamtdicke der unmittelbar danebenliegenden Barrengruppe variiert, wobei diese Dicke durch die Regel bestimmt ist, dass in der Zone der grössten Axialbewegung des Körpers der zugeordnete Abstandshalter am dicksten ist.

## Revendications

1. Procédé de fabrication de corps en céramique pressés à chaud, comprenant la préparation de plusieurs billettes en céramique, l'empilement desdites billettes dans un ensemble de presse muni de parois pour supporter lesdites billettes perpendiculairement à la direction de pression et le pressage à chaud de groupes desdites billettes empilées, sous pression et en chauffant pour densifier chacune desdites billettes, caractérisé en ce que lesdites billettes en céramique ont un rapport de l'épaisseur par rapport à la largeur situé dans la plage allant de 1:3 à 1:40 et une masse volumique de 1,7 à 2,7 g/cm³, ledit empilement étant réalisé en groupes de nombre progressivement décroissant, de sorte que pour un groupe de billettes situé dans une zone de ladite compression, qui donne lieu au mouvement le plus faible le long de ladite direction de pression, le nombre de billettes empilées est le plus grand dans ledit groupe, et pour un groupe de billettes situé dans une zone de compression qui donne lieu au mouvement le plus important le long de ladite direction de pression, le nombre de billettes empilées dans ledit groupe est le plus faible, chaque groupe étant séparé des groupes voisins à l'aide d'un élément d'espacement inerte et rigide, et ledit pressage à chaud étant effectué pour densifier chacune desdites billettes jusqu'à au moins 95% de la densité théorique avec un rapport de compression de 1,2:1 à 2:1.

2. Procédé suivant la revendication 1, dans lequel ledit pressage à chaud est réalisé avec une pression uniaxiale, et dans lequel le nombre de billettes dans chacun desdits groupes s'échelonne à partir d'un nombre maximum de 5 à 3, 2, 1, ce dernier étant le groupe subissant le mouvement relatif le plus important.

3. Procédé suivant la revendication 1, dans lequel ladite pression est appliquée biaxialement et dans lequel la séquence des groupes contient dans l'ordre les nombres suivants: 1, 2, 3, 10, 3, 2, 1, le groupe ayant le nombre 1 subissant le mouvement le plus important pendant la compression et le groupe ayant le nombre 10 subissant le mouvement le plus faible pendant la compression.

4. Procédé suivant la revendication 1, dans lequel lesdites billettes de céramique sont des billettes en nitrure de silicium et sont préparées en chauffant un mélange d'une poudre de silicium, Y₂O₃ et de Al₂O₃ dans une atmosphère d'azote pendant un temps et à une température appropriée pour agglomérer ladite masse jusqu'à une masse volumique d'environ 2,3 g/cm³ et une composition chimique contenant principalement du nitrure de silicium de phase alpha et des oxynitrures d'yttrium et de silicium.

5. Procédé suivant la revendication 1, dans lequel ledit pressage à chaud est effectué par incréments en appliquant environ 1034 kPa (150 psi) à la température ambiante, en chauffant à 982°C (1800°F) conjointement avec une pression de $3,44 \times 10^3$ kPa (500 psi), ensuite en chauffant jusqu'à 1316°C (2400°F) avec une pression de $1,72 \times 10^4$ kPa (2500 psi), et finalement jusqu'à 1649°C (3000°F) avec une pression de $2,55 \times 10^4$ kPa (3700 psi).

6. Procédé suivant la revendication 1, dans lequel lesdites billettes de céramique sont des billettes en nitrure de silicium et sont préparées par compactage à froid d'un mélange broyé à sec avec des boulets, d'une poudre de silicium, d'Y₂O₃ et d'Al₂O₃ et ensuite par chauffage dans une atmosphère d'azote pour convertir ledit mélange en principalement du nitrure de silicium et des oxynitrures d'yttrium et de silicium, le compactage à froid étant effectué avec une pression d'environ $9,53 \times 10^3$ à $10,34 \times 10^3$ kPa (1400—1500 psi).

7. Procédé suivant la revendication 1, dans lequel chaque élément d'espacement a une épaisseur de 0,65 à 2,54 cm (0,25—1,0 pouce).

8. Procédé suivant la revendication 7, dans lequel l'épaisseur de chaque élément d'espacement varie avec l'épaisseur totale du groupe de billettes en position immédiatement adjacente à l'élément d'espacement, ladite épaisseur étant déterminée par la règle suivant laquelle dans la zone du mouvement axial le plus important du corps, l'élément d'espacement associé à celui-ci est le plus épais.

Fig. 1.

Fig.2.

Fig.3.